# EUROPÄISCHE PATENTANMELDUNG

(11) **EP 1 483 958 A1**
(43) Veröffentlichungstag der Anmeldung: **08.12.2004**
(21) Anmeldenummer: 03012654.4
(22) Anmeldetag: 04.06.2003
(51) Int. Cl.: A01K 27/00

(54) **Tierleine mit Haken**

(71) Anmelder: Rolf C. Hagen, Inc., Montreal, Quebec H4R 1E8 (CA)
(72) Erfinder: Plante, Robin, Sainte-Barbe, Quebec (CA)
(74) Vertreter: Meyer, Ludgerus A.

(57) **Zusammenfassung**

Die Erfindung betrifft eine Tierleine, insbesondere eine sogenannte Automatikleine, die eine aus flexiblem Material bestehende Leine (14) und einen Haken (18) aufweist, der mit der Leine verbunden ist, zur Verwendung an einem Halsband (46) oder einem Tiergeschirr. Erfindungsgemäß ist eine Schutzhülle (20) aus weichem Material vorgesehen, das den Haken umgibt, um Verletzungen von Personen durch das Ende der den Haken tragenden Leine oder den harten Aufprall auf Objekte zu verhindern.

## Beschreibung

Die Erfindung betrifft Leinen für Tiere und insbesondere eine Schutzabdeckung für Haken von rückziehbaren Leinen, um eine Verletzung von Personen zu vermeiden, die sich in der Umgebung aufhalten, wo solche Leinen benutzt werden.

Rückziehleinen (häufig auch Automatikleinen genannt) sind bei Hundehaltern und anderen sehr beliebt. Von verschiedenen Herstellern werden unterschiedliche Rückzugsleinen hergestellt, die im wesentlichen alle ein Gehäuse enthalten, das eine Rolle zur Aufnahme der Leine enthält. Typischerweise stehen die Rollen unter Federkraft, so dass der Teil der Leine, der sich außerhalb des Gehäuses befindet, automatisch zurückgezogen wird, wenn die Rolle nicht blockiert ist. Die Gehäuse sind normalerweise mit einem Handgriff versehen, der für den Benutzer bequem und komfortabel ist. Die Leinen weisen am Ende kräftige Haken auf, um diese am Geschirr oder Halsband, das vom Tier getragen wird, zu befestigen. Einige Besitzer solcher Leinen erlitten jedoch Verletzungen aufgrund des schnellen Zurückziehens der Leine in das Gehäuse, da der Haken wie ein Projektil flog und sie getroffen hat.

Der Erfindung liegt die Aufgabe zugrunde, eine Abdeckung oder einen Schutz für den Haken einer Leine anzugeben, die eine erhöhte Sicherheit gegen Verletzung einer Person, die die Rückzugleine betätigt, oder in der Nähe stehende Personen gewährleistet oder den Aufschlag auf Gegenstände abdämpft.

Die vorliegende Erfindung ist gekennzeichnet durch eine weiche gummiartige Hülle, die am Ende der Leine angeordnet ist und sich über den Haken und andere harte Objekte erstreckt, wie z.B. einen D-Ring oder andere Befestiger, mit denen der Haken an der Leine befestigt ist. Gemäß einem Aspekt der Erfindung ist die Hülle an der Leine befestigt, so dass sie normalerweise nicht an der Leine entlang rutschen kann, sondern in Position verbleibt, um die Schutzwirkung durch Abdeckung des Hakens und anderer harter Objekte zu erfüllen.

Gemäß einem anderen Aspekt der Erfindung ist die Hülle leicht deformierbar, so dass sie zurückgezogen werden kann, um den Haken freizugeben, so dass der Haken leicht geöffnet und geschlossen werden kann, wenn er an dem Halsband oder dem Geschirr des Tieres befestigt oder davon gelöst werden soll. Gemäß einem noch anderen Aspekt der Anmeldung ist die Hülle an ihrem Ende, das den Haken überlappt, mit einer äußeren Oberfläche versehen, die leicht erfasst werden kann, wenn die Hülle zurückgezogen werden soll, um den Haken freizugeben. Der rückwärtige Teil der Hülle kann mit Schlitzen oder anderen Öffnungen versehen sein, um die Flexibilität oder die Verformbarkeit der Hülle zu verbessern, so dass es leichter ist, sie aus einer entspannten Position, in der sie den Haken überlappt, zurückzuziehen. Das rückwärtige Teil kann auch mit axial vorstehenden Rippen versehen sein, um die Rückkehr in die Originalform der Hülle zu unterstützen, sobald sie freigegeben wird.

Die Erfindung wird nachstehend anhand eines Ausführungsbeispiels näher erläutert. Es zeigen:
- Fig. 1: eine Seitenansicht einer Rückzugsleine, deren Haken mit einem Ring am Halsband eines Hundes befestigt ist,
- Fig. 2: eine vergrößerte Seitenansicht einer Schutzhülle, die einen Haken und andere feste Teile am Ende der Leine aufnimmt,
- Fig. 3: eine Seitenansicht, die zeigt wie die Hülle leicht zurückgezogen werden kann, um den Haken freizugeben,
- Fig. 4: eine Seitenansicht des Hakens und anderer harter Elemente, die an der Leine angeordnet sind, wobei die Hülle in Strichdarstellung gezeigt ist,
- Fig. 5: eine Querschnittsansicht einer Ausführungsform der Schutzhülle,
- Fig. 6: eine ähnliche Ansicht wie Figur 2 und 4, die die Art zeigt, in der die Hülle an der Leine befestigt ist,
- Fig. 7: eine Querschnittsansicht der Hülle entlang der Schnittlinie VII-VII von Figur 5,
- Fig. 8: eine Querschnittsansicht der Hülle entlang der Linie VIII-VIII von Figur 6,
- Fig. 9: eine Seitenansicht einer anderen Ausführungsform der Schutzhülle nach der Erfindung, und
- Fig. 10: eine Querschnittsansicht einer Hülle von Figur 9, entlang einer Schnittlinie X-X dieser Figur.

Die Erfindung ist nicht auf die Details der Konstruktion und die Anordnung der Komponenten in der nachfolgenden Beschreibung oder den Zeichnungen beschränkt. Die Erfindung kann auch bei anderen Ausführungsformen und auf andere Weise praktiziert oder ausgeführt werden. Die verwendeten Begriffe dienen nur der Beschreibung und nicht der Beschränkung. Die Verwendung der Begriffe "einschließlich", "enthält", "hat", "enthält", "beinhaltet" und deren Abweichungen bedeutet, dass deren nachstehende Merkmale und Äquivalente sowie zusätzliche Merkmale betroffen sind.

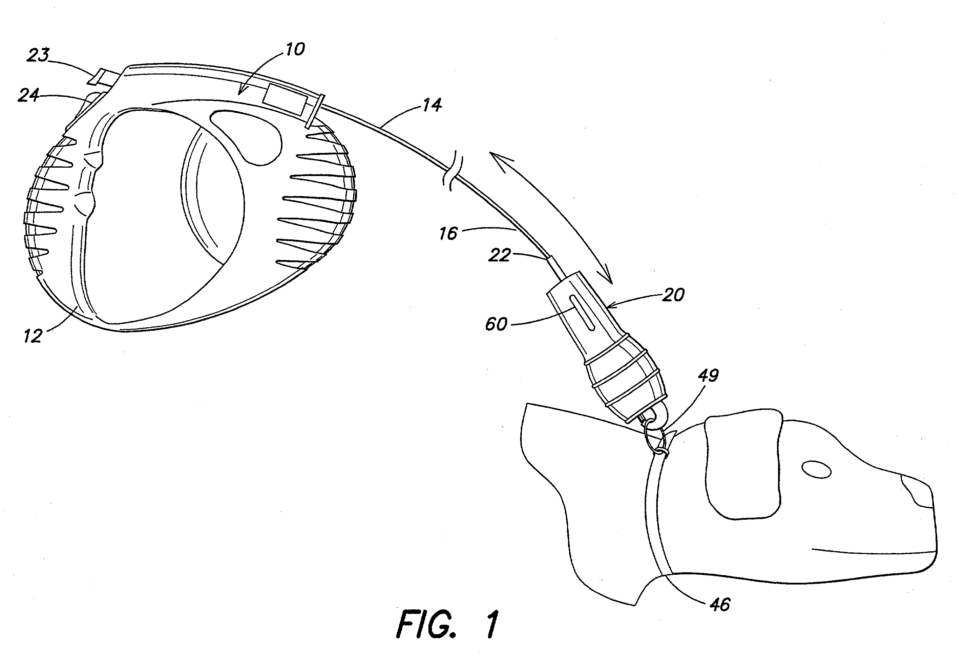

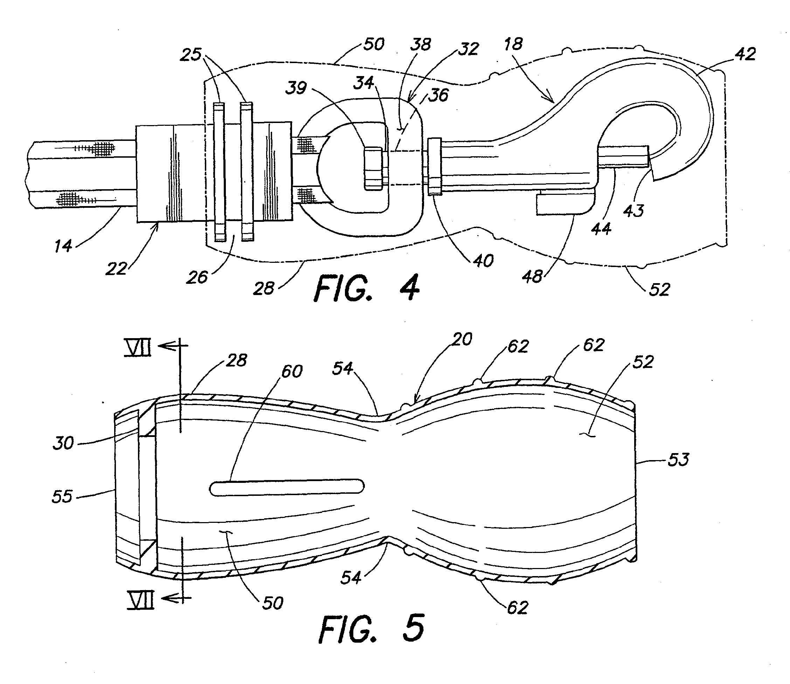

Eine Rückzugsleine gemäß Fig. 1 enthält ein Gehäuse 10 mit einem Handgriff 12 und weist eine nicht dargestellte Rolle auf, auf der sich die Leine 14 befindet. An ihrem freien Ende 16 trägt die Leine einen Haken 18, z. B. Karabinerhaken, der normalerweise aus Metall besteht, zur Befestigung an einem Halsband oder Geschirr eines Tieres gemäß Fig. 4. Der Haken 18 ist mit einer Schutzhülle 20 umgeben. Die Details dieser Teile werden nachstehend erläutert.

Die beispielhaft dargestellte Rückzugsleine zeigt einen Betätigungsknopf 23, der beim Drücken bewirkt, dass der im Gehäuse 10 angeordnete Mechanismus die Leine 14 relativ schnell zurückspult. Der Knopf 23 dient zum Lösen eines Sperrschalters 24, der in einer Stellung den Rückzugsmechanismus sperrt, so dass der ausgezogene Teil der Leine 14 ausgezogen bleibt. Wenn der Knopf 23 betätigt wird, wird der Sperrschalter 24 gelöst und löst damit seinerseits den Mechanismus im Gehäuse 10, so dass die Leine schnell hineingezogen werden kann. Ein solcher Mechanismus ist allgemein bekannt.

Die Leine 14 kann aus irgendeiner Zahl von unterschiedlichen Materialien mit ausreichender Festigkeit bestehen, um den Kräften zu widerstehen, die durch ein ziehendes Tier aufgebracht werden. Typische Leinen bestehen aus Nylon oder einer Kunststoffzusammensetzung. Die Leine muss außerdem sehr flexibel sein, so dass sie schnell im Gehäuse aufgespult werden kann. Die Leine muss ebenfalls frei von scharfen Kanten sein und in alle Richtungen flexibel sein, so dass die Bewegung des Tieres weder behindert wird, noch das Tier verletzt wird, wenn die Leine sich um irgendeinen Teil des Tierkörpers wickelt oder das Tier anderweitig damit in Kontakt kommt.

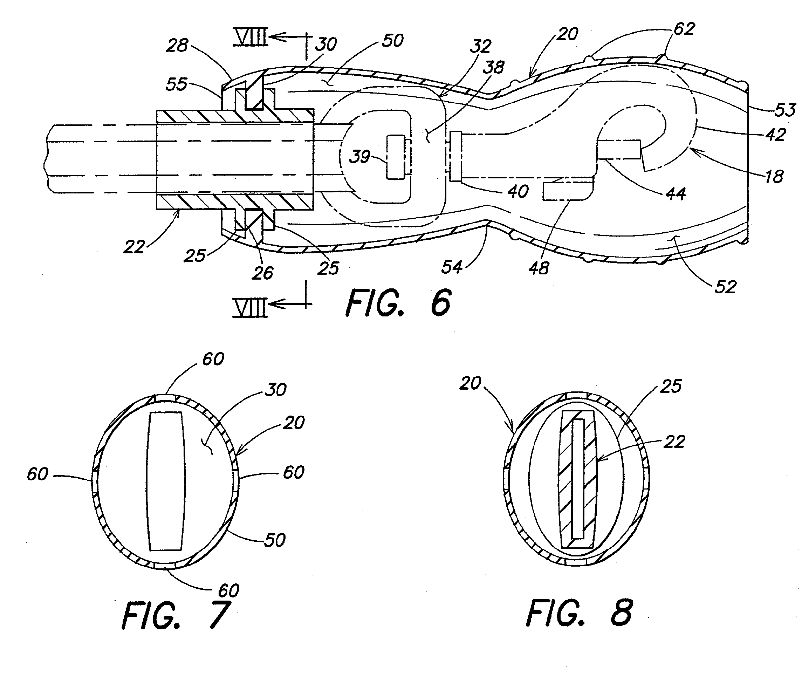

Das Ende 16 der Leine 14 trägt einen Verbinder 22, der angeformt oder auf andere Weise daran befestigt ist und vorzugsweise aus festem gummiartigem Material oder Kunststoff besteht, das in der dargestellten Ausführungsform einen im wesentlichen flachen Querschnitt aufweist und ein Paar von elliptischen Flanschen 25 trägt, zwischen denen ein Spalt 26 gebildet ist, der als Verbindung zum hinteren Ende 28 der Hülle 20 dient. Wie in den Figuren 5 und 6 gezeigt, enthält das hintere Ende 28 der Hülle einen inneren ringförmigen Flansch 30, der in den Spalt 26 passt, der durch die Flansche 25 und den Verbinder 22 gebildet ist. Der ringförmige Flansch 30 hält das rückwärtige Ende 28 der Hülle 20 an dem Verbinder 22.

Die Hülle 20 kann aus Silikon, einem weichen Elastomer oder Gummi oder einem anderen Material bestehen, das die physikalische Eigenschaft aufweist, den Haken 18 und andere harte Objekte am Ende der Leine abdecken zu können und einen Schutz für die Umstehenden bietet, insbesondere wenn die Leine zurückgezogen wird, und es gleichzeitig ermöglicht, die Hülle zurückzuziehen, um den Haken freizugeben, wenn er an dem oder von dem Halsband oder Geschirr des Tieres befestigt oder entfernt wird. Während der Flansch 30 bei der normalen Benutzung die Hülle 20 in einer Position hält, in der sie den Haken und andere Teile abdeckt, mit denen der Haken an der Leine befestigt ist, ermöglicht dies, dass die Hülle entfernt wird, wenn ein Ersatz notwendig ist.

Das äußere Ende der Leine 14 hinter dem Verbinder 22 trägt einen D-Ring 32, der normalerweise aus Metall besteht. Typischerweise ist der D-Ring 32 mit dem Ende der Leine verbunden, indem das Ende der Leine durch den Ring gezogen ist und mit der Leine vernäht oder daran auf andere Weise befestigt ist, wie z. B. Pressen, Kleben, usw. Der D-Ring 32 seinerseits trägt den Schiebehaken 18 über den Hakenstift 34, der sich durch eine Öffnung 36 im geraden Bereich 38 des Rings erstreckt. Der Haken wird durch ein Paar von Flanschen 39 und 40, die auf beiden Seiten des geraden Bereichs 38 des Rings 32 angeordnet sind, gehalten. Der Haken 18 kann vorzugsweise in der Öffnung 36 im D-Ring frei drehen, jedoch löst er sich nicht davon aufgrund der Flansche 39 und 40.

Der Schiebehaken kann ein übliches Design einschließlich einem Kopf 42 und einem Rückzugstift 44 aufweisen, die zusammen eine geschlossenen Bogen bilden, um einen Ring oder einen anderen geschlossenen Verbinder aufzunehmen, wie z.B. bei 49 an dem Hundehalsband 46 in Figur 1 gezeigt. Ein Fingerbetätigungselement 48 ist mit dem Stift verbunden und bewegt das Ende des Stifts vom Ende 43 des Kopfes 42 weg, wenn es in Richtung des Stiftes 34 zurückgezogen wird. Normalerweise steht der Stift 44 unter Federkraft in Richtung geschlossener Position gemäß den Figuren 4 und 6. Er kann jedoch so zurückgezogen werden, dass der Bogen geöffnet wird und der Ring oder ein anderer damit verbundener Verbinder gelöst wird. Es ist darauf hinzuweisen, dass der Schiebehaken 18 lediglich eine Art von unterschiedlichen Verbindern darstellt, die bei Tierleinen verwendet werden, um sie mit dem Hundehalsband oder dem Geschirr zu verbinden. Andere Arten von Verbindern wie z. B. Schnapphaken, Teilungsverbindungen, Doppel-S-Verbindungen sind bei der vorliegenden Erfindung ebenfalls verwendbar.

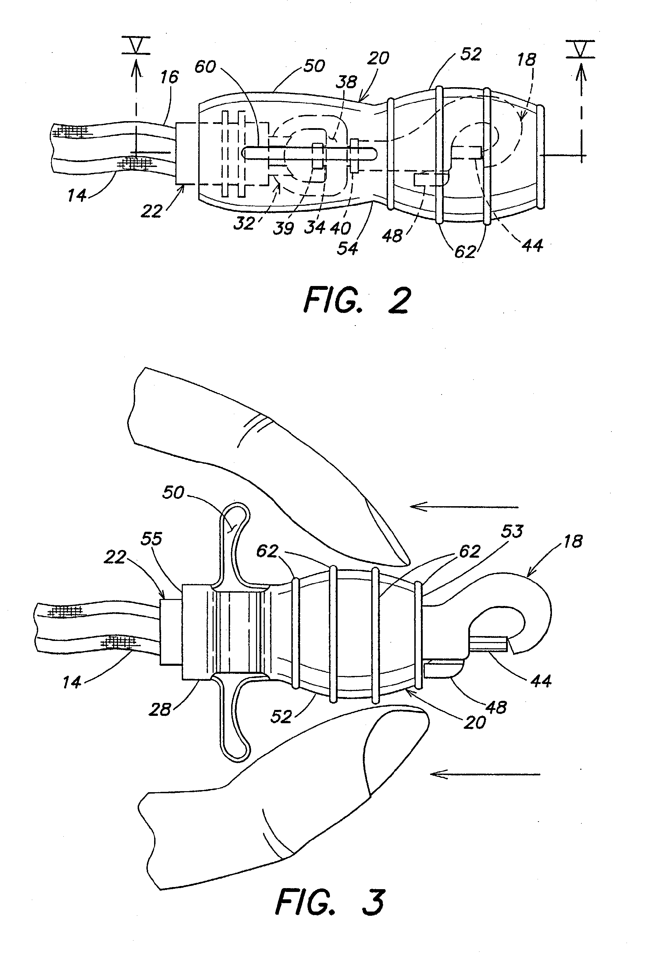

Die Schutzhülle 20 weist eine leicht uhrglasförmige Form auf mit vergrößerten Kammern 52 und einem eingeschnürtem mittleren Bereich 54 auf. Die Kammer 50 ist ausreichend groß, um den D-Ring 32 sowie den ringförmigen Flansch 30 und die Flansche 25 des Verbinders 22 aufzunehmen. Die Kammer 52 ist auch groß genug, um den Kopf 42 des Hakens 18 aufzunehmen und es zu ermöglichen, dass dieser um die Achse des Hakenstiftes 34 dreht. Der eingeschnürte Teil 54 beschränkt die Verschiebung der Hülle etwas, auch wenn sie nicht zweckmäßigerweise gemäß der Figur 3 zusammengedrückt ist. D.h. das vordere Ende der Hülle, das die Kammer 52 definiert, wird nicht ohne zusätzliches Drücken am anderen Ende der Hülle, die die Kammer 50 definiert, zusammenfallen. Die Hüllenkammer 52 ist am freien Ende 53 offen, so dass der Haken sich aus der Kammer gemäß Figur 3 erstrecken kann, wie nachstehend beschrieben ist. Das andere Ende 55 der Hülle 20 ist ebenfalls offen, um die Verbindung am Verbinder 22 zu erleichtern.

Wie in den Figuren 1, 2, 5 und 7 gezeigt ist, weist der rückwärtige Bereich der Hülle 20, der die Kammer 50 bildet, eine Mehrzahl von sich axial erstreckenden Spalten 60 auf, die die Steifheit der Hülle im hinteren Bereich reduzieren, so dass die Hülle leicht zusammengedrückt oder zurückgezogen werden kann gemäß der in Figur 3 dargestellten Art, um das Kopfende des Hakens 18 einschließlich des Betätigungsgliedes 48 freizugeben. Um dem Benutzer beim Zurückziehen des vorderen Endes zu unterstützen, um den Arbeitsbereich des Hakens freizugeben, sind eine Reihe von umlaufenden Rippen 62 am Außenumfang der Hülle vorgesehen, so dass der vordere Bereich, der die Kammer 52 bildet, leicht zwischen den Fingern erfasst werden kann. Es ist darauf hinzuweisen, dass, wenn die Hülle nach hinten zurückgezogen ist, der vordere Bereich den Kopfteil 42 und das Betätigungsglied 48 des Hakens freigibt, so dass es leicht bedient werden kann. Es ist außerdem darauf hinzuweisen, dass die natürliche Spannung der Hülle die Stellung ist, die in den Figuren 2 und 4-6 gezeigt ist. Damit werden der Haken 18 und der D-Ring 32 vollständig abgedeckt. Wenn das Ende der Leine zufällig jemanden berührt, verhindert die weiche Schutzhülle, die alle die relevanten Haken und schweren Teile am Ende der Leine umgibt, dass eine Verletzung auftreten kann.

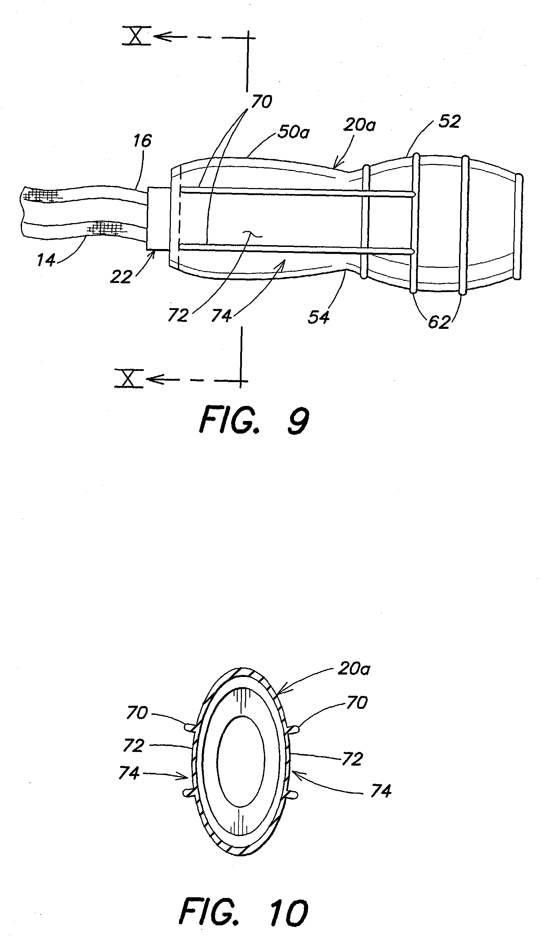

In den Figuren 9 und 10 sind andere Ausführungsformen dargestellt. Anders als bei der ersten Ausführungsform weist der hintere Bereich 50a der Hülle 20a sich axial erstreckende Rippen 70 an der Oberfläche 72 auf und hat keine Spalten 60. In der dargestellten Ausführungsform sind zwei solcher Rippen 70 an den flacheren Seiten 74 der Hülle angeordnet, jedoch kann auch eine unterschiedliche Zahl von Anordnungen verwendet werden und diese können auch an der inneren und/oder äußeren Oberfläche der Hülle angeordnet sein. Die Rippen 70 erhöhen die Rückstellkräfte der Hülle, die sie in die ausgezogene Position zurückkehren lassen, in der sie den Haken abdecken, wenn das vordere Teil der Hülle in der zurückgezogenen Position freigegeben wird. Die Weglassung von Spalten erhöht außerdem die Abdeckung des Hakens, um die Aufschlagstärke des Hakens zu reduzieren, wenn dieser jemand oder irgendetwas berührt, wenn er schnell zurückgezogen wird. Darüber hinaus wird das Losreißen der Hülle reduziert.

Während die vorstehende Beschreibung ein spezielles Ausführungsbeispiel zur Verbindung der Hülle 20 mit der Leine 14, die Verwendung eines D-Rings zur Verbindung des Hakens der Leine und eine spezielle Konfiguration des Hakens zur Verbindung der Leine mit einem Geschirr oder Halsband eines Tieres darstellt, ist darauf hinzuweisen, dass die verschiedenen Teile andere Formen gemäß anderen Ausführungsformen der Erfindung darstellen können. Z. B. kann das hintere Ende der Hülle direkt mit der Leine verbunden sein, ohne dass ein spezieller Verbinder 22 verwendet wird. Die Hülle kann z. B. direkt mit dem Leinenmaterial durch UltraschallSchweißen, durch Verklebung oder durch andere ähnliche Mittel verbunden sein, abhängig davon, ob es beabsichtigt ist, dass die Hülle entfernbar oder ersetzbar ist. Ferner kann der D-Ring durch andere Formen von Verbindern ersetzt werden und der Ring selbst kann ein integrales Teil des Hakens sein. Der Haken kann eine große Variationsbreite unterschiedlicher Formen aufweisen. Z. B. kann eine Kupplung zur Verbindung der Leine mit dem Tiergeschirr oder Halsband als zweiteiliges Element ausgebildet sein, mit z. B. einer Hülle und einem Stecker, welche Bajonett-Verbindungs-Komponenten aufweisen, um die zwei Teile zu verbinden. Eine der Komponenten kann permanent an dem Halsband befestigt sein, während die andere Komponente an der Leine befestigt ist. Andere Kupplungsanordnungen sind verfügbar und jede Anordnung, die eine Verletzung bewirken könnte, wird Vorteile zur Verwendung einer Leinenanordnung, wie hier beschreiben, bieten.

Während verschieden Aspekte der zwei Ausführungsformen der Erfindung dargestellt sind, ist darauf hinzuweisen, dass verschiedene Änderungen, Modifikationen und Verbesserungen dem Fachmann leicht zur Verfügung stehen. Solche Änderung, Modifikationen und Verbesserungen sind Teil der Beschreibung und es ist beabsichtigt, dass diese im Rahmen und im Schutzumfang der Erfindung liegen. Entsprechend sind die vorstehende Beschreibung und die Zeichnungen nur als Beispiel zu sehen.

### Bezugszeichen

- 10: Gehäuse
- 12: Handgriff
- 14: Leine
- 16: Ende
- 18: Haken
- 20: Schutzhülle
- 20a: Hülle
- 22: Verbinder
- 23: Betätigungsknopf
- 24: Sperrschalter
- 25: Flansch
- 26: Spalt
- 28: Ende
- 30: Flansch
- 32: D-Ring
- 34: Stift
- 36: Öffnung
- 38: Bereich
- 39: Flansch
- 40: Flansch
- 42: Kopf
- 43: Ende
- 44: Rückzugsstift
- 46: Halsband
- 48: Fingerbetätigungselement
- 49: Ring
- 50: Kammer
- 50a: Bereich
- 52: Kammer
- 53: Ende
- 54: Bereich
- 55: Ende
- 62: Rippen
- 70: Rippen
- 72: Oberfläche
- 74: Seiten

## Patentansprüche

**1.** Tierleine, die eine aus flexiblem Material bestehenden Leine (14) und einen Haken (18) aufweist, der mit der Leine verbunden ist, zur Verwendung an einem Halsband oder einem Tiergeschirr, **gekennzeichnet durch** eine Schutzhülle (20) aus weichem Material, das den Haken umgibt, insbesondere, um Verletzungen von Personen **durch** das Ende der den Haken tragenden Leine oder den harten Aufprall auf Objekte zu verhindern.

**2.** Tierleine nach Anspruch 1, bei der die Schutzhülle rohrförmig ausgebildet ist, wobei ein Ende in Bezug auf die Verbindung des Hakens fest mit der Leine verbunden ist und die Schutzhülle gegen die Leine hin zusammendrückbar ist, um den Haken hinter das Ende der Schutzhülle zu bringen.

**3.** Tierleine nach Anspruch 2, bei der das hintere Teil der Schutzhülle Rippen aufweist, um die Schutzhülle zur Abdeckung des Hakens in ihrem nicht zusammengedrückten Zustand zu bringen.

**4.** Tierleine nach Anspruch 2, bei der der rückwärtige Teil der Schutzhülle Öffnungen zur Erhöhung der Zusammendrückbarkeit der Schutzhülle aufweist.

**5.** Tierleine nach Anspruch 2, bei der die Schutzhülle ein Vorderteil aufweist, das zur Aufnahme des Hakens ballonförmig ausgebildet ist.

**6.** Tierleine nach Anspruch 5, bei der der hintere Bereich der Schutzhülle Rippen aufweist, um die Abdeckung in den nicht zusammengedrückten Zustand bringen zu können, um den Haken abzudecken.

**7.** Tierleine nach Anspruch 4, bei der die Öffnungen sich in Längsrichtung der Schutzhülle erstrecken.

**9.** Rückziehbare Tierleine mit einem Gehäuse, das eine Rolle zur Aufnahme einer Leine aufweist, einer unter Federkraft stehenden Einrichtung in dem Gehäuse, die mit der Rolle in Eingriff steht, um die Leine in das Gehäuse zurück zu ziehen, einer Öffnung in dem Gehäuse, durch die ein Ende der Leine aus dem Gehäuse herausziehbar ist und von der Spule abwickelbar ist, einer Kupplung, die mit dem Ende der Leine, das aus dem Gehäuse herausgezogen ist, in Verbindung steht, wenn sie mit einem Halsband oder einem Tiergeschirr zur Verbindung der Leine in Eingriff zu bringen, und mit einer Schutzhülle, die an dem Ende der Leine befestigt ist und die Kupplung abdeckt, wobei die Schutzhülle aus weichem Material besteht, um zu verhindern, dass die Kupplung Verletzungen hervorruft, wenn die Leine schnell in das Gehäuse zurück gezogen wird.

**10.** Rückziehbare Tierleine nach Anspruch 9, bei der die Schutzhülle eine Hülle aus flexiblem Material ist, dass sie axial zusammenpressbar ist, um die Kupplung freizugeben, wenn sie mit einem Halsband oder Geschirr verbunden oder davon gelöst wird.

**11.** Rückziehbare Tierleine nach Anspruch 9, bei der die Schutzhülle rohrförmig ausgebildet ist und sich über die gesamte Länge der Kupplung erstreckt.

**12.** Rückziehbare Tierleine nach Anspruch 10, bei der ein Ende der Kupplung an der Leine befestigt ist und ein Ende der Abdeckung bezogen auf dieses Ende der Kupplung daran befestigt ist.

**13.** Rückziehbare Tierleine nach Anspruch 12, bei der das andere Ende der Abdeckung gegen das erste Ende rückziehbar ist, um einen wesentlichen Teil der Kupplung freizulegen.

**14.** Rückziehbare Leine nach Anspruch 13, bei der die Schutzhülle an einem Ende eine Mehrzahl von Spalten aufweist, um die Abdeckung leicht zusammen zu drücken, um die Kupplung freizugeben.

**15.** Rückziehbare Leine nach Anspruch 14, bei der die Schutzhülle im Endbereich gegenüberliegend dem ersten Ende vergrößert ist.

**16.** Rückziehbare Leine nach Anspruch 10, bei der die Hülle ein wulstförmiges Teil am Ende aufweist, das die Kupplung abdeckt, und Griffelemente enthält, die an der Oberfläche des wulstförmigen Teils vorgesehen sind, um die Hülle axial zusammendrücken zu können.

**17.** Rückziehbare Tierleine nach Anspruch 10, bei der die Leine an dem aus dem Gehäuse gezogenen Ende einen Träger, einen ringförmigen Sitz und einen Passflansch auf der Hülle aufweist, um die Hülle mit dem Träger zu verbinden.

**18.** Rückziehbare Tierleine nach Anspruch 17, bei der Mittel auf der Hülle nahe der Verbindung der Hülle mit dem Träger vorgesehen sind, um die Hülle von der Verbindung nach vorn drücken zu können, um die Kupplung abzudecken.

**19.** Rückziehbare Tierleine nach Anspruch 17, bei der die Griffbereiche auf der Oberfläche der Hülle an dem Teil vorgesehen sind, das die Kupplung abdeckt, um das axiale Zusammendrücken der Hülle zum Freigeben der Kupplung zu unterstützen.

**20.** Rückziehbare Tierleine nach Anspruch 19, bei der die Kupplung ein Betätigungsglied zur Öffnung der Kupplung enthält, um das Halsband oder das Geschirr zu ergreifen oder freizugeben, wenn die Hülle zusammengedrückt ist, um die Kupplung freizugeben.
